Europäisches Patentamt

European Patent Office

Office européen des brevets

(19)

(11) **EP 1 188 088 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(21) Anmeldenummer: **00935196.6**

(22) Anmeldetag: **09.06.2000**

(51) Int Cl.$^7$: **G02B 23/24**

(86) Internationale Anmeldenummer:
**PCT/EP00/05331**

(87) Internationale Veröffentlichungsnummer:
**WO 01/001186 (04.01.2001 Gazette 2001/01)**

(54) **ENDOSKOP MIT EINEM ABLENKSYSTEM**

ENDOSCOPE COMPRISING A DEFLECTION SYSTEM

ENDOSCOPE POURVU D'UN SYSTEME DE DEVIATION

(84) Benannte Vertragsstaaten:
**DE FR GB IT**

(30) Priorität: **25.06.1999 DE 19929045**

(43) Veröffentlichungstag der Anmeldung:
**20.03.2002 Patentblatt 2002/12**

(73) Patentinhaber: **Karl Storz GmbH & Co. KG**
**78532 Tuttlingen (DE)**

(72) Erfinder: **LEDERER, Frank**
**D-78532 Tuttlingen (DE)**

(74) Vertreter: **Fugmann, Winfried et al**
**Karl Storz GmbH & Co. KG**
**Mittelstrasse 8**
**78532 Tuttlingen (DE)**

(56) Entgegenhaltungen:
**WO-A-99/10762     DE-A- 2 458 306**
**US-A- 4 720 178     US-A- 4 730 909**
**US-A- 5 028 127**

**Beschreibung**

Die Erfindung bezieht sich auf ein Endoskop mit einem Relaissystem, das eine optische Achse definiert, und einem Ablenksystem zur Ablenkung eines unter einem Winkel von bis zu 30° bezüglich besagter optischer Achse in das Endoskop einfallenden Strahls in diese Achse, wobei das Ablenksystem Ablenkmittel umfaßt, die reflektierende Flächen enthalten.

Endoskope weisen an ihrem distalen Ende ein Objektiv auf, das ein Bild der zu betrachtenden Szene entwirft. Dieses Bild wird optisch oder elektronisch an das proximale Ende vermittelt, wo es der Betrachtung zugänglich ist. Endoskopobjektive müssen so gestaltet sein, daß sie in einem engen Rohr unterzubringen sind.

Häufig ist es wünschenswert, wenn das Gesichtsfeld nicht symmetrisch zur Achse des Endoskops angeordnet ist, sondern wenn die Blickrichtung einen kleineren oder größeren Winkel mit der Endoskopachse einschließt. In diesem Fall müssen Ablenkmittel vorgesehen werden, die Licht aus dem abzubildenden Gesichtsfeld in Richtung der Achse des Endoskops ablenken. Welche Ablenkmittel geeignet sind, hängt insbesondere vom gewünschten Blickwinkel des Endoskops, d. h., vom Ablenkwinkel ab.

Bei bekannten Endoskopen werden bei kleinen Ablenkwinkeln, bis ca. 15°, als Ablenkmittel refraktierende Elemente, wie Keilplatten, eine dezentrierte Frontlinse, eine dezentrierte Okulareinheit oder Kombinationen davon eingesetzt. Bei größeren Ablenkwinkeln, ab ca. 25°, kommen dagegen reflektierende Elemente, wie etwa Prismen mit verspiegelten Flächen, zum Einsatz.

Keilplatten oder die Dezentrierung von abbildenden optischen Elementen haben den Nachteil einer Verschlechterung der Abbildungsqualität durch eine mit dem Ablenkwinkel zunehmende Verzerrung des Gesichtsfeldes. Wird die Okulareinheit dezentriert, muß darüber hinaus die Größe des Bildfelds verringert werden, um eine Vignettierung zu vermeiden. Refraktierende Elemente verursachen außerdem grundsätzlich Farbfehler, die aufwendig korrigiert werden müssen.

Reflektierende optische Elemente weisen diese Fehler nicht auf. Ein Ablenksystem, in dem zwei reflektierende Flächen vorgesehen sind, wird in der DE 35 37 155 A1 beschrieben. Hierbei weist das Objektiv ein Linsensystem auf, das das Objektfeld in eine Bildebene abbildet, die senkrecht zur Achse des Endoskops angeordnet ist. Zwischen der plankonkaven Frontlinse und den übrigen Linsen des Linsensystems ist eine aus zwei miteinander verkitteten Prismen bestehende Ablenkeinheit angeordnet, in der das vom Objektfeld einfallende Licht an einer zur Achse des Endoskops parallelen Außenfläche des einen Prismas und an der Grenzfläche zwischen den Prismen reflektiert wird.

Bei einem ähnlich aufgebauten, aus der US 4,684,224 bekannten System ist auf der Eintrittsfläche der Ablenkeinheit eine planparallele Platte aufgebracht, auf die eine plankonkave Linse aufgekittet ist. Bei dieser Ablenkeinheit sind zwei reflektierende Flächen vorgesehen, die beide mit der Achse des Endoskops einen Winkel einschließen.

Aus der WO 99/10762 ist ein Endoskopobjektiv bekannt, bei dem die Ablenkeinheit aus nur einem Prisma mit zwei reflektierenden Flächen besteht, auf das direkt die plankonkave Frontlinse aufgekittet ist. Eine planparallele Platte oder ein zweites Prisma ist hier nicht notwendig, da auf der der Frontlinse zugewandten Seite eine totalreflektierende Schicht aufgebracht ist.

Bei dem aus der DE 24 58 306 C3 bekannten Endoskopobjektiv sind zwei Prismen vorgesehen, wobei der in die optische Achse abgelenkte einfallende Strahl an zwei Grenzflächen eines der beiden Prismen insgesamt zweimal reflektiert wird. Aus der US 4,730,909 ist ein Ablenksystem für Ablenkwinkel von mehr als 90° bekannt, bei dem der einfallende Strahl mehr als zweimal reflektiert wird.

Den genannten Endoskopobjektiven mit reflektierenden Ablenkmitteln ist es gemeinsam, daß sie für Ablenkwinkel von weniger als ca. 30° nicht geeignet sind oder nur bei Inkaufnahme von Einschränkungen im nutzbaren Bildfelddurchmesser, einer Verzerrung des Gesichtsfeldes oder einer sonstigen Verschlechterung der Abbildungsqualität.

Es ist die Aufgabe der vorliegenden Erfindung, ein Endoskop anzugeben, das nicht die genannten Nachteile refraktierender Ablenkmittel aufweist, aber auch für Ablenkwinkel von weniger als ca. 30° geeignet ist. Bevorzugt soll ein Ablenksystem für Ablenkwinkel von 5° bis 25°, insbesondere im Bereich von ca. 15°, angegeben werden.

Diese Aufgabe wird erfindungsgemäß durch die Merkmale des Anspruchs 1 gelöst. Dadurch, daß im Ablenksystem Ablenkmittel vorhanden sind, die reflektierende Flächen enthalten, wobei die reflektierenden Flächen derart angeordnet sind, daß ein in die optische Achse abgelenkter Strahl mehr als zweimal reflektiert wird, ist es möglich, bei geringem Raumbedarf des Ablenksystems Ablenkwinkel zwischen 0° und 30° zu erreichen, ohne die Nachteile refraktierender Ablenkmittel in Kauf zu nehmen. Die optische Achse ist dabei die optische Achse des Endoskops, insbesondere die optische Achse der dem Ablenksystem nachgeschalteten optischen Elemente, beispielsweise optischer Elemente des Objektivs.

In einer bevorzugten Ausführungsform der Erfindung wird mindestens eine reflektierende Fläche sowohl in Transmission als auch in Reflexion genutzt. Hierbei wird die Tatsache ausgenutzt, daß bei kleinen Einfallswinkeln Transmission und bei großen Einfallswinkeln Reflexion auftritt. Durch diese Maßnahme kann eine besonders kompakte Bauweise erreicht werden, da sich die reflektierende Fläche über den gesamten Querschnitt erstrecken kann, ohne daß die für die Transmission zur Verfügung stehende Fläche verringert wird.

In einer weiteren bevorzugten Ausführungsform der Erfindung wird die genannte reflektierende Fläche nur einmal zur Transmission genutzt, während eine oder mehrere Reflexionen an dieser Fläche stattfinden können. Dies ermöglicht es, mit relativ wenigen optischen Elementen und relativ wenigen Reflexionen Ablenkwinkel im gewünschten Bereich zu erzielen.

In einer weiteren bevorzugten Ausführungsform der Erfindung erfolgt die Reflexion an der genannten reflektierenden Fläche gegen eine dünne Schicht, wobei die Schicht auch eine Beschichtung aus mehreren dünnen Schichten sein kann. Bei einer transparenten Beschichtung ist, je nach Einfallswinkel, sowohl Transmission, als auch Reflexion möglich. Obwohl die Reflexion auch gegen ein anderes Glasmaterial oder gegen Luft erfolgen könnte, hat die Reflexion gegen eine dünne Schicht den Vorteil, daß die Reflexion nur durch die Materialien des Trägers der Schicht, innerhalb dessen die Reflexion stattfindet, und der Schicht selbst bestimmt wird; auf der dem Träger entgegengesetzten Seite der Schicht kann ein Luftspalt oder ein anderes Medium angeordnet sein, ohne daß dies einen wesentlichen Einfluß auf die Reflexion hätte.

In einer weiteren bevorzugten Ausführungsform der Erfindung wird der in die optische Achse abgelenkte einfallende Strahl an der mindestens einen reflektierenden Fläche totalreflektiert. Dies hat den Vorteil einer praktisch verlustfreien Reflexion.

Wenn der Brechungsindex einer totalreflektierenden Schicht $n$(Schicht) ist und der des Trägers $n$(Glas), so gilt für den Grenzwinkel $\alpha$(Grenz) der Totalreflexion gegen die Schicht:

$$\sin \alpha(\text{Grenz}) = n(\text{Schicht}) / n(\text{Glas}),$$

d. h., daß

$$n(\text{Schicht}) < n(\text{Glas})$$

sein muß, damit überhaupt Totalreflexion möglich ist. Darüber hinaus sollte für die Dicke $d$ der Schicht gelten:

$$d > 1.2 \, \lambda / n(\text{Schicht}),$$

wobei $\lambda$ die Wellenlänge des verwendeten Lichts ist, damit verlustfreie Totalreflexion stattfinden kann.

Eine solche Schicht kann als Ein- oder Mehrschichtsystem ausgebildet sein und mit bekannten Beschichtungsverfahren aufgebracht werden, wie in der WO 99/10762 angegeben; bei Mehrschichtsystemen muß die obige Bedingung für wenigstens eine der aufgebrachten Schichten gelten.

Die Brechungsindizes und die Winkel der optisch wirksamen Flächen zueinander sind dabei so zu wählen, daß die Totalreflexion möglichst auch für alle anderen Strahlen aus dem zu beobachtenden Gesichtsfeld stattfindet. Insbesondere kann für die Differenz der Brechungsindizes zwischen dem Träger der totalreflektierenden Schicht und der totalreflektierenden Schicht gelten:

$$n(\text{Glas}) - n(\text{Schicht}) > 0,3,$$

damit in einem weiten Bereich von Einfallswinkeln Totalreflexion auftritt. Damit können Strahlen aus einem großen Winkelbereich mit der Ablenkeinheit abgelenkt und mit dem Endoskopobjektiv abgebildet werden, so daß ein großer Bildfeldwinkel ermöglicht wird. Materialien, die diese Eigenschaft haben, sind beispielsweise $MgF_2$ als Material der Schicht mit $n$(Schicht) = 1.38 und LaSF N31 als Trägermaterial mit $n$(Glas) = 1.88.

Die totalreflektierende Beschichtung kann auch in bekannter Weise so ausgebildet sein, daß sie gleichzeitig als reflexmindernde Schicht wirkt. Dies hat den Vorteil, daß störende Reflexe weitgehend vermieden werden können.

In einer weiteren bevorzugten Ausführungsform der Erfindung ist das Ablenksystem als Ablenkeinheit ausgebildet, die aus mehreren, im Strahlengang nacheinander angeordneten prismatischen Elementen besteht, die bevorzugt zwischen optischen Elementen des Objektivs, insbesondere zwischen der Frontlinse bzw. dem Deckglas des Objektivs und den weiteren optischen Elementen des Objektivs, angeordnet ist. Die Ablenkeinheit ist damit Bestandteil des Endoskopobjektivs. Hierdurch wird eine kompakte Bauweise und eine kostengünstige Herstellung des Objektivs zusammen mit der Ablenkeinheit ermöglicht.

Hierbei ist es besonders bevorzugt, daß die prismatischen Elemente miteinander verkittet sind, wodurch eine besonders kompakte und mechanisch stabile Bauform erreicht wird. Zwei oder drei prismatische Elemente sind dabei schon ausreichend, um eine Ablenkeinheit mit den gewünschten Eigenschaften zu schaffen.

In einer weiteren bevorzugten Ausführungsform der Erfindung ist die genannte dünne Schicht auf eine solche Fläche eines prismatischen Elements aufgebracht, auf die ein anderes prismatisches Element aufgekittet ist. Diese Fläche wird dann sowohl in Transmission als auch in Reflexion genutzt. Dies hat den Vorteil einer besonders kompakten und mechanisch stabilen Bauweise und einer kostengünstigen Herstellung, da auf zusätzliche Abstands- und Halterungselemente verzichtet werden kann.

In einer weiteren bevorzugten Ausführungsform der Erfindung bestehen die miteinander verkitteten prismatischen Elemente jeweils aus Materialien mit gleichem Brechungsindex. Dies hat den Vorteil, daß auch für Strahlen, die die gemeinsame Fläche in einem schrägem Winkel durchsetzen, keine Brechung erfolgt und damit keine entsprechenden Abbildungsfehler auftreten. Darüber hinaus werden hierdurch unerwünschte Reflexionen verringert.

In einer weiteren bevorzugten Ausführungsform der Erfindung wird der in die optische Achse abgelenkte einfallende Strahl, nachdem er im Ablenksystem ein oder mehrere prismatische Elemente durchlaufen hat, im demjenigen prismatischen Element, das er zuletzt durchläuft, mehr als einmal reflektiert. Dadurch wird es ermöglicht, bei kurzer Baulänge und ohne Verlust an Helligkeit oder Bildfelddurchmesser die gewünschten Ablenkwinkel zu erzielen.

In einer weiteren bevorzugten Ausführungsform der Erfindung werden die einfallenden Strahlen in jedem Element höchstens zweimal reflektiert. Dadurch ist es möglich, geometrisch einfache prismatische Elemente mit lediglich drei optisch wirksamen Flächen zu verwenden, wobei die Strahlen an höchstens zwei Flächen jeweils einmal reflektiert werden und durch eine Fläche in das Element ein- und durch eine Fläche aus dem prismatischen Element austreten; hierbei kann eine Fläche sowohl in Transmission als auch in Reflexion genutzt werden.

In einer weiteren bevorzugten Ausführungsform der Erfindung trifft der in die optische Achse abgelenkte einfallende Strahl jeweils senkrecht auf jede Grenzfläche des Ablenksystems, die in Transmission genutzt wird, auf, insbesondere auch auf die Eintrittsfläche der Ablenkeinheit. Da die Ablenkung damit ausschließlich durch Reflexion erfolgt, treten die mit refraktierenden Ablenkmitteln grundsätzlich verbundenen Bildfehler nicht auf.

Erfindungsgemäß kann eine ungerade oder eine gerade Anzahl von Reflexionen vorgesehen sein. Hierbei ist eine solche Ausbildung des erfindungsgemäßen Ablenksystems, bei der drei oder vier Reflexionen auftreten, besonders bevorzugt.

Bei starren Endoskopen wird das vom Objektiv entworfene Bild in der Regel durch Relaislinsensysteme zum Okular weitergeleitet, die das Bild jeweils von einer Zwischenbildebene in die nächste abbilden; da hiermit jeweils eine Umkehrung verbunden ist, werden die Relaislinsensysteme auch als "Umkehrsysteme" bezeichnet. Je nach der, durch die Länge des Endoskops bestimmten, Anzahl der Umkehrsysteme können für die Erzeugung eines aufrecht stehenden und seitenrichtigen Bildes zusätzliche Umkehrmittel, etwa ein Umkehrprisma, notwendig sein.

Bei einem Endoskop mit einer ungeraden Anzahl von Umkehrsystemen ist es daher bevorzugt, wenn im Ablenksystem eine gerade Anzahl von Reflexionen stattfindet, insbesondere insgesamt vier. Diese Ausführung hat den Vorteil, daß auf zusätzliche Umkehrmittel verzichtet werden kann, denn einschließlich der vom Objektiv erzeugten Abbildung findet dann im Endoskop insgesamt eine gerade Anzahl von Umkehrungen statt.

Bei einem Endoskop mit einer geraden Anzahl von Umkehrsystemen ist es aus dem gleichen Grunde bevorzugt, wenn im Ablenksystem eine ungerade Anzahl von Reflexionen stattfindet, insbesondere insgesamt drei. Da dadurch ein höhenrichtiges, jedoch seitenverkehrtes Bild entsteht, sind dann allerdings noch zusätzliche Umkehrmittel notwendig, um durch eine weitere Reflexion an einer entsprechend angeordneten Fläche ein höhen- und seitenrichtiges Bild zu erhalten.

Ein Endoskop mit einem erfindungsgemäßen Ablenksystem hat den Vorteil, daß durch entsprechende Ausbildung der Ablenkmittel nahezu beliebige Ablenkwinkel im Bereich unterhalb von ca. 30° erzielt werden können, bevorzugt im Bereich zwischen 5° und 25°, besonders bevorzugt ca. 15°. Durch die Verwendung reflektierender Ablenkmittel treten die mit refraktiven Ablenkmitteln verbundenen Nachteile nicht auf. Das erfindungsgemäße Ablenksystem, insbesondere die erfindungsgemäße Ablenkeinheit, erfüllt die räumlichen Anforderungen, die an Endoskop-Optiken gestellt sind, und erlaubt eine kostengünstige Herstellung und Montage.

Im folgenden wird die Erfindung anhand von Ausführungsbeispielen näher erläutert.

Die Figuren der Zeichnung zeigen:

Fig. 1 - 3:  Drei Ausführungsbeispiele mit einer aus zwei einfachen prismatischen Elementen zusammengesetzten Ablenkeinheit mit drei Reflexionen, in der Reihenfolge zunehmenden Ablenkwinkels,

Fig. 4:  ein weiteres Ausführungsbeispiel mit einer aus zwei prismatischen Elementen zusammengesetzten Ablenkeinheit mit drei Reflexionen,

Fig. 5:  ein Ausführungsbeispiel mit einer aus zwei prismatischen Elementen zusammengesetzten Ablenkeinheit mit vier Reflexionen,

Fig. 6:  ein Ausführungsbeispiel mit einer aus drei prismatischen Elementen zusammengesetzten Ablenkeinheit mit vier Reflexionen, und

Fig. 7:  ein Ausführungsbeispiel eines Endoskops mit einem erfindungsgemäßen Ablenksystem.

Allen gezeigten Ausführungsbeispielen 1 - 6 ist gemeinsam, daß die Ablenkmittel als Ablenkeinheit zwischen zwei optischen Elementen des Objektivs angeordnet sind und damit Teil des Objektivs sind. Diese optischen Elemente des Objektivs sind die plankonkave Frontlinse (1) und eine weitere Objektivlinse (4), die hier plankonvex ausgebildet ist; weitere optische Elemente des Objektivs, die der Objektivlinse (4) folgen, sind nicht dargestellt. Die Ablenkeinheit ist in den gezeigten Beispielen jeweils mit diesen beiden optischen Elementen des Objektivs verkittet. Die Objektebene ist links von der Frontlinse (1), die Bildebene rechts von der weiteren Objektivlinse (4) angeordnet. Die optische Achse ist strichpunktiert dargestellt.

Jedes prismatische Element hat drei optisch wirksame Flächen; diejenigen Flächen der prismatischen Elemente, die keine optische Funktion haben, können aus Raumgründen eben oder beispielsweise auch zylindrisch abgeschliffen sein. Die erste Fläche des ersten prismatischen Elements (2) ist in allen Ausführungsbeispielen senkrecht zur optischen Achse angeordnet und stellt die Eintrittsfläche der Ablenkeinheit dar. Die dritte Fläche des zweiten prismatischen Elements (3) steht senkrecht zur Achse des Endoskops und stellt die Austrittsfläche der Ablenkeinheit dar. Die übrigen Flächen der prismatischen Elemente können schräg oder parallel zur Achse des Endoskops sein.

Die Brechungsindizes der prismatischen Elemente sind vorzugsweise gleich, können aber auch unterschiedlich sein. In den gezeigten Beispielen ist der Brechungsindex der prismatischen Elemente jeweils $n$ (Glas) = 1.88.

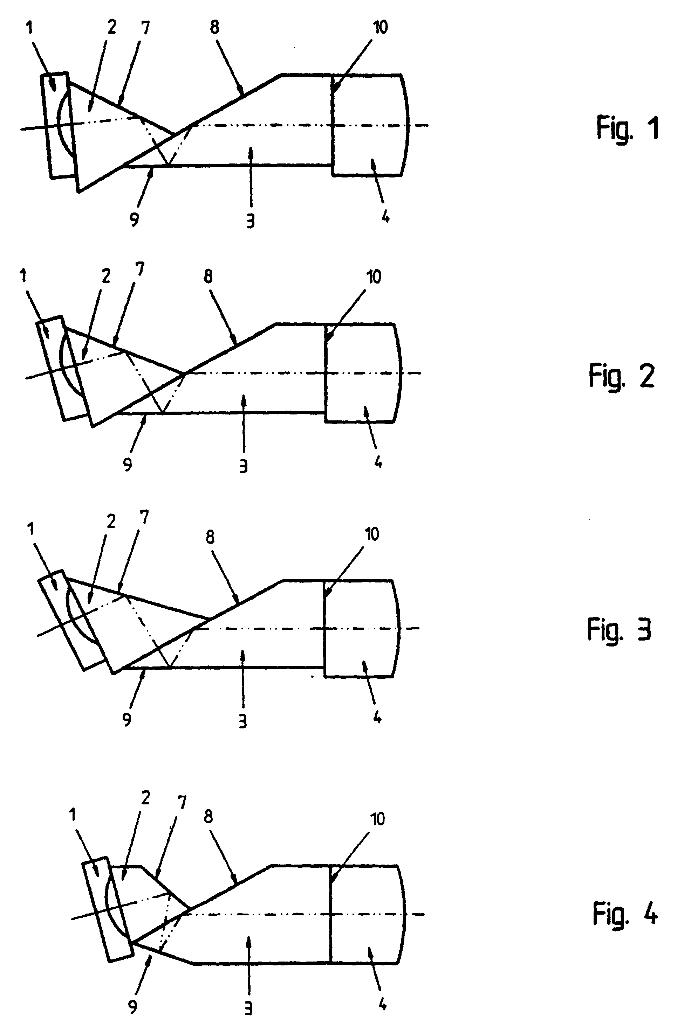

Bei den Ausführungsbeispielen nach Fig. 1 - 3 besteht die Ablenkeinheit jeweils aus einem ersten (2) und einem zweiten, im wesentlichen prismatischen Element (3), wobei das erste prismatische Element (2) auf die schräge Fläche (8) des zweiten prismatischen Elements aufgekittet ist. Das in das Objektiv aus dem Gesichtsfeld eintretende Licht wird, nachdem es die Frontlinse (1) passiert hat, von der verspiegelten oder totalreflektierenden Fläche (7) des ersten prismatischen Elements reflektiert, so daß die optische Achse senkrecht auf der gemeinsamen Grenzfläche des ersten (2) mit dem zweiten prismatischen Element (3) steht. Diese Fläche ist mit einer Beschichtung versehen, deren Material, Dicke und Zusammensetzung so gewählt sind, daß sie zunächst den in das Objektiv eintretenden Strahl möglichst verlustfrei hindurchläßt, und danach diesen Strahl, nachdem er an der verspiegelten oder totalreflektierenden Fläche (9) des zweiten prismatischen Elements (3) reflektiert worden ist, total reflektiert. Nach dieser, insgesamt dritten Reflexion verläuft der Strahl parallel zur Achse des Endoskops und durchläuft die weiteren optischen Elemente des Objektivs.

Bei den Ausführungsbeispielen nach Fig. 1 - 3 wird der "Firstwinkel" des ersten prismatischen Elements von 65° in Fig. 1 auf 90° in Fig. 3 vergrößert, um verschiedene Ablenkwinkel zu realisieren, wobei hier die beiden anderen Winkel des ersten prismatischen Elements jeweils untereinander gleich sind. Ein Firstwinkel von 60° ergibt ein Geradeausblick-Objektiv, d. h., einen Ablenkwinkel von 0°, während ein größerer Firstwinkel einen entsprechend größeren Ablenkwinkel einzustellen gestattet. Die Normale zur schrägen Fläche (8) des zweiten prismatischen Elements schließt jeweils mit der optischen Achse einen Winkel von 60° ein. Die verspiegelte oder totalreflektierende Fläche (9) des zweiten prismatischen Elements ist hier parallel zur optischen Achse angeordnet.

Bei dem Ausführungsbeispiel nach Fig. 4 durchsetzt die optische Achse die gemeinsame Grenzfläche zwischen erstem (2) und zweitem prismatischen Element (3) nicht senkrecht, sondern unter einem anderen Winkel; dementsprechend ist die Beschichtung auf der gemeinsamen Grenzfläche so ausgelegt, daß sie unter diesem Winkel durchlässig, jedoch bei der nachfolgenden Reflexion totalreflektierend ist. Die verspiegelte oder totalreflektierende Fläche (9) des zweiten prismatischen Elements (3) ist hier gegenüber der Achse des Endoskops geneigt.

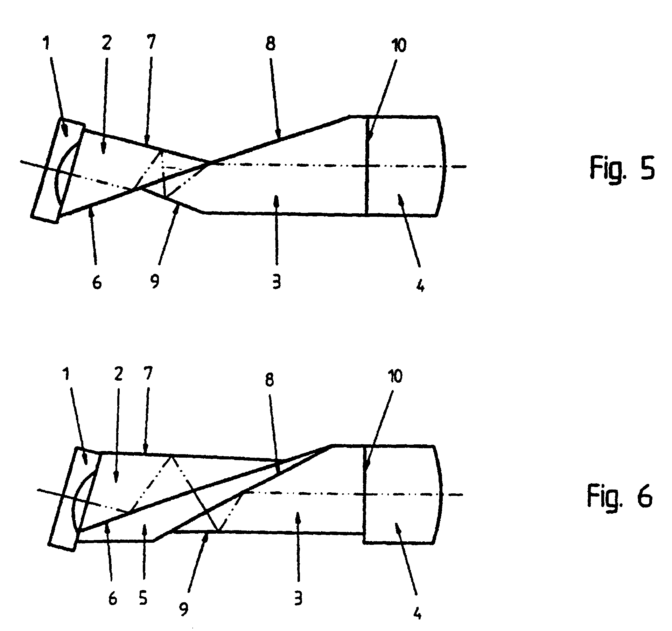

Bei dem Ausführungsbeispiel nach Fig. 5 wird der einfallende Strahl an der gemeinsamen Grenzfläche zwischen erstem (2) und zweitem prismatischen Element (3) bzw. an den Verlängerungen (6) bzw. (8) dieser Fläche insgesamt zweimal reflektiert und tritt einmal durch diese Fläche hindurch.

Bei dem Ausführungsbeispiel nach Fig. 6 ist zusätzlich ein keilförmiges Element (5) vorgesehen, das zwischen erstes (2) und zweites (3) prismatisches Element eingekittet ist und eine zusätzliche Einstellung des Ablenkwinkels erlaubt.

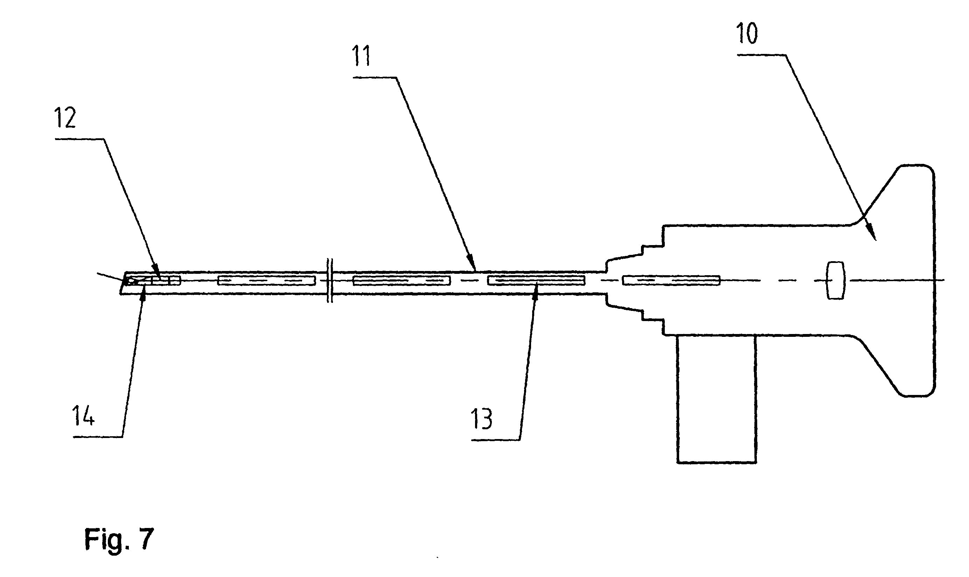

Ein Endoskop mit einem erfindungsgemäßen Ablenksystem besteht in dem in Fig. 7 gezeigten Ausführungsbeispiel aus einem Okularteil (10), der u. a. das in Fig. 7 schematisch als Linse dargestellte Okular enthält, sowie einem länglichen Schaft (11), in dem weitere optische Bauteile untergebracht sind; dies sind am distalen Ende des Endoskops das Objektiv (12), das die zu beobachtende Szene aufnimmt und in einer ersten Zwischenbildebene ein Zwischenbild entwirft, sowie hier jeweils aus zwei stabförmigen Linsen (13) bestehende Relaislinsensysteme, die durch Abbildung jeweils aus einer Zwischenbildebene in die nächste das Bild vom Objektiv (12) zum Okular weiterleiten. In diesem Ausführungsbeispiel enthält das Objektiv (12) die Ablenkeinheit (14), die einen von der Achse des Endoskops abweichenden Blickwinkel ermöglicht. Der Lichtleiteranschluß zum Anschluß einer externen Lichtquelle zur Beleuchtung des Objektfeldes ist in Fig. 7 schematisch unterhalb des Okularteils (10) dargestellt. Weitere, durch die Anwendung des Endoskops bestimmte Merkmale des Endoskops, wie etwa Vorrichtungen für den Einsatz zusammen mit Arbeitsinstrumenten oder Saug- und Spüleinrichtungen, sind in Fig. 7 nicht dargestellt.

Die Erfindung ist allgemein auf Endoskope oder vergleichbare Sehrohre, beispielsweise Periskope, anwendbar, unabhängig von der Art der Bildübertragung, etwa durch Relaislinsensysteme, Glasfasern oder elektronische Mittel, unabhängig von der Art der Anwendung in Medizin oder Technik, und auch für starre, wie auch für flexible Endoskope bzw. Sehrohre.

**Patentansprüche**

1. Endoskop mit

   - einem Relaissystem, das eine optische Achse definiert, und
   - einem Ablenksystem zur Ablenkung eines unter einem Winkel von bis zu 30° bezüglich besagter optischer Achse in das Endoskop einfallenden Strahls in diese Achse,

- wobei das Ablenksystem Ablenkmittel umfaßt, die reflektierende Flächen enthalten, und
- wobei die reflektierenden Flächen derart angeordnet sind,
- daß der in die optische Achse abgelenkte Strahl mehr als zweimal reflektiert wird.

2. Endoskop nach Anspruch 1, **dadurch gekennzeichnet, daß** mindestens eine reflektierende Fläche sowohl in Transmission als auch in Reflexion genutzt wird.

3. Endoskop nach Anspruch 2, **dadurch gekennzeichnet, daß** die mindestens eine reflektierende Fläche nur einmal in Transmission genutzt wird.

4. Endoskop nach Anspruch 2 oder 3, **dadurch gekennzeichnet, daß** auf der mindestens einen reflektierenden Fläche eine dünne Schicht vorhanden ist, gegen die die Reflexion erfolgt.

5. Endoskop nach einem der Ansprüche 2 - 4, **dadurch gekennzeichnet, daß** der in die optische Achse abgelenkte einfallende Strahl an der mindestens einen reflektierenden Fläche totalreflektiert wird.

6. Endoskop nach einem der Ansprüche 1 - 5, **dadurch gekennzeichnet, daß** die Ablenkmittel eine Ablenkeinheit bilden, die aus mehreren, im Strahlengang nacheinander angeordneten, prismatischen Elementen besteht.

7. Endoskop nach Anspruch 6, **dadurch gekennzeichnet, daß** die prismatischen Elemente miteinander verkittet sind.

8. Endoskop nach Anspruch 7, **dadurch gekennzeichnet, daß** die Ablenkeinheit aus zwei oder drei miteinander verkitteten prismatischen Elementen besteht.

9. Endoskop nach Anspruch 7 oder 8 in Verbindung mit Anspruch 4, **dadurch gekennzeichnet, daß** die dünne Schicht auf eine solche Fläche eines prismatischen Elements aufgebracht ist, auf die ein anderes prismatisches Element aufgekittet ist.

10. Endoskop nach einem der Ansprüche 7 - 9, **dadurch gekennzeichnet, daß** jeweils zwei miteinander verkittete prismatische Elemente aus Materialien mit gleichem Brechungsindex bestehen.

11. Endoskop nach einem der Ansprüche 6 - 10, **dadurch gekennzeichnet, daß** der in die optische Achse abgelenkte einfallende Strahl in demjenigen prismatischen Element, das von diesem Strahl zuletzt durchlaufen wird, mehr als einmal reflektiert wird.

12. Endoskop nach einem der Ansprüche 6 - 11, **dadurch gekennzeichnet, daß** der in die optische Achse abgelenkte einfallende Strahl in jedem prismatischen Element höchstens zweimal reflektiert wird.

13. Endoskop nach einem der Ansprüche 6 - 12, **dadurch gekennzeichnet, daß** der in die optische Achse abgelenkte einfallende Strahl senkrecht auf die Eintrittsfläche der Ablenkeinheit auftrifft.

14. Endoskop nach einem der Ansprüche 1 - 13, **dadurch gekennzeichnet, daß** der in die optische Achse abgelenkte einfallende Strahl auf jede Grenzfläche des Endoskops, die er durchsetzt, senkrecht auftrifft.

15. Endoskop nach einem der Ansprüche 1 - 14, **dadurch gekennzeichnet, daß** der in die optische Achse abgelenkte einfallende Strahl im Ablenksystem insgesamt dreimal reflektiert wird.

16. Endoskop nach einem der Ansprüche 1 - 14, **dadurch gekennzeichnet, daß** der in die optische Achse abgelenkte einfallende Strahl im Ablenksystem insgesamt viermal reflektiert wird.

17. Endoskop nach einem der Ansprüche 1 - 16, **dadurch gekennzeichnet, daß** die Ablenkmittel so ausgebildet sind, daß der in die optische Achse abgelenkte einfallende Strahl insgesamt um einen Ablenkwinkel zwischen 5° und 25°, bevorzugt um 15°, abgelenkt wird.

**Claims**

1. Endoscope comprising

- a relay system which defines an optical axis, and
- a deflection system for deflecting onto this optical axis a beam falling into the endoscope at an angle of up to 30° with reference to said axis,
- the deflection system comprising deflecting means which include reflecting faces and
- the reflecting faces being arranged in such a way
- that the beam deflected onto the optical axis is reflected more than twice.

2. Endoscope according to Claim 1, **characterized in that** at least one reflecting face is used both for transmission and for reflection.

**3.** Endoscope according to Claim 2, **characterized in that** the at least one reflecting face is used only once for transmission.

**4.** Endoscope according to Claim 2 or 3, **characterized in that** present on the at least one reflecting face is a thin layer towards which the reflection is performed.

**5.** Endoscope according to one of Claims 2-4, **characterized in that** the incident beam deflected onto the optical axis is totally reflected at the at least one reflecting face.

**6.** Endoscope according to one of Claims 1-5, **characterized in that** the deflecting means form a deflection unit comprising a plurality of prismatic elements arranged sequentially in the beam path.

**7.** Endoscope according to Claim 6, **characterized in that** the prismatic elements are cemented to one another.

**8.** Endoscope according to Claim 7, **characterized in that** the deflecting unit comprises two or three prismatic elements cemented to one another.

**9.** Endoscope according to Claim 7 or 8, in conjunction with Claim 4, **characterized in that** the thin layer is applied to a particular face of a prismatic element to which another prismatic element is cemented.

**10.** Endoscope according to one of Claims 7-9, **characterized in that** in each case two prismatic elements cemented to one another consist of materials with the same refractive index.

**11.** Endoscope according to one of Claims 6-10, **characterized in that** the incident beam deflected onto the optical axis is reflected more than once **in that** prismatic element which is last traversed by this beam.

**12.** Endoscope according to one of Claims 6-11, **characterized in that** the incident beam deflected onto the optical axis is reflected at most twice in each prismatic element.

**13.** Endoscope according to one of Claims 6-12, **characterized in that** the incident beam deflected onto the optical axis strikes the entrance face of the deflecting unit perpendicularly.

**14.** Endoscope according to one of Claims 1-13, **characterized in that** the incident beam deflected onto the optical axis strikes perpendicularly each interface of the endoscope which it traverses.

**15.** Endoscope according to one of Claims 1-14, **characterized in that** the incident beam deflected onto the optical axis is reflected a total of three times in the deflection system.

**16.** Endoscope according to one of Claims 1-14, **characterized in that** the incident beam deflected onto the optical axis is reflected a total of four times in the deflection system.

**17.** Endoscope according to one of Claims 1-16, **characterized in that** the deflecting means are designed in such a way that the incident beam deflected onto the optical axis is deflected in all by a deflection angle of between 5° and 25°, preferably by 15°.

**Revendications**

**1.** Endoscope comprenant

- un système de relais définissant un axe optique, et
- un système de déviation pour dévier un faisceau tombant dans l'endoscope suivant un angle allant jusqu'à 30° par rapport audit axe optique, dans cet axe,
- le système de déviation comprenant des moyens de déviation qui contiennent des faces réfléchissantes, et
- les faces réfléchissantes étant agencées de telle sorte
- que le faisceau dévié dans l'axe optique soit réfléchi plus de deux fois.

**2.** Endoscope selon la revendication 1, **caractérisé en ce qu'**au moins une face réfléchissante est utilisée à la fois pour la transmission et pour la réflexion.

**3.** Endoscope selon la revendication 2, **caractérisé en ce que** l'au moins une face réfléchissante est utilisée seulement une fois pour la transmission.

**4.** Endoscope selon la revendication 2 ou 3, **caractérisé en ce qu'**une mince couche est prévue sur l'au moins une face réfléchissante, contre laquelle s'effectue la réflexion.

**5.** Endoscope selon l'une quelconque des revendications 2 à 4, **caractérisé en ce que** le faisceau tombant dévié dans l'axe optique est totalement réfléchi sur l'au moins une face réfléchissante.

**6.** Endoscope selon l'une quelconque des revendications 1 à 5, **caractérisé en ce que** les moyens de déviation forment une unité de déviation qui se compose de plusieurs éléments prismatiques disposés les uns derrière les autres dans le passage du faisceau.

7. Endoscope selon la revendication 6, **caractérisé en ce que** les éléments prismatiques sont collés les uns aux autres.

8. Endoscope selon la revendication 7, **caractérisé en ce que** l'unité de déviation se compose de deux ou de trois éléments prismatiques collés ensemble.

9. Endoscope selon la revendication 7 ou 8 en relation avec la revendication 4, **caractérisé en ce que** la mince couche est appliquée sur une face d'un élément prismatique sur laquelle est collé un autre élément prismatique.

10. Endoscope selon l'une quelconque des revendications 7 à 9, **caractérisé en ce qu'**à chaque fois deux éléments prismatiques collés ensemble se composent de matériaux ayant le même indice de réfraction.

11. Endoscope selon l'une quelconque des revendications 6 à 10, **caractérisé en ce que** le faisceau tombant dévié dans l'axe optique dans l'élément prismatique qui est traversé en dernier par ce faisceau, est réfléchi plus d'une fois.

12. Endoscope selon l'une quelconque des revendications 6 à 11, **caractérisé en ce que** le faisceau tombant dévié dans l'axe optique est réfléchi deux fois au maximum dans chaque élément prismatique.

13. Endoscope selon l'une quelconque des revendications 6 à 12, **caractérisé en ce que** le faisceau tombant dévié dans l'axe optique arrive perpendiculairement sur la face d'entrée de l'unité de déviation.

14. Endoscope selon l'une quelconque des revendications 1 à 13, **caractérisé en ce que** le faisceau tombant dévié dans l'axe optique arrive perpendiculairement sur chaque face limite de l'endoscope qu'il traverse.

15. Endoscope selon l'une quelconque des revendications 1 à 14, **caractérisé en ce que** le faisceau tombant dévié dans l'axe optique est réfléchi trois fois au total dans le système de déviation.

16. Endoscope selon l'une quelconque des revendications 1 à 14, **caractérisé en ce que** le faisceau tombant dévié dans l'axe optique est réfléchi quatre fois au total dans le système de déviation.

17. Endoscope selon l'une quelconque des revendications 1 à 16, **caractérisé en ce que** les moyens de déviation sont réalisés de telle sorte que le faisceau tombant dévié dans l'axe optique soit dévier au total d'un angle de déviation compris entre 5° et 25°, de préférence de 15°.

Fig. 1

Fig. 2

Fig. 3

Fig. 4

Fig. 5

Fig. 6

Fig. 7